Europäisches Patentamt

European Patent Office

Office européen des brevets

(19)

(11) Publication number: **0 219 871**
A2

(12) **EUROPEAN PATENT APPLICATION**

(21) Application number: 86114721.3

(22) Date of filing: 01.08.83

(51) Int. Cl.⁴: C 04 B 24/26

(30) Priority: 30.07.82 JP 131904/82
22.09.82 JP 163900/82

(43) Date of publication of application:
29.04.87 Bulletin 87/18

(84) Designated Contracting States:
DE FR GB NL SE

(60) Publication number of the earlier application
in accordance with Art. 76 EPC: 0 100 671

(71) Applicant: TAKENAKA KOMUTEN CO. LTD.
27, 4-chome, Honmachi Higashi-ku
Osaka-shi Osaka 541(JP)

(71) Applicant: TAKENAKA DOBOKU CO. LTD.
21-1, 8-chome, Ginza Chuo-ku
Tokyo 104(JP)

(71) Applicant: SANKYO CHEMICAL INDUSTRIES LTD.
9-19, 3-chome, Ginza Chuo-ku
Tokyo(JP)

(72) Inventor: Sakuta, Masaharu
3-8-331, 2-chome Minamisuna
Koto-ku Tokyo 136(JP)

(72) Inventor: Kiya, Soichi
432-106-1104, Terada-cho
Hachioji-shi Tokyo 193(JP)

(72) Inventor: Uchizaki, Iwao
5-1-122, 1-chome Motoazabu
Minato-ku Tokyo 106(JP)

(72) Inventor: Yoshioka, Yasuhiko
3980-5, Jindaiji
Mitaka-shi Tokyo 181(JP)

(72) Inventor: Ito, Koichi
21-16, 3-chome, Kugahara
Ota-ku Tokyo 146(JP)

(72) Inventor: Saito, Toshio
20-335, 2-chome, Hibarigaoka
Kashiwa-shi Chiba 227(JP)

(72) Inventor: Kaya, Tadahiro
20-24, 1-chome, Fujimigaoka Ninomiya-cho
Naka-gun Kanagawa 259-01(JP)

(72) Inventor: Shioya, Tsunetoshi
11-33, 1-chome, Honkugenuma
Fujisawa-shi Kanagawa 251(JP)

(72) Inventor: Shimoyama, Yoshifumi
313-7, Shimotsuchidana
Fujisawa-shi Kanagawa 251(JP)

(72) Inventor: Yamakawa, Hiroyuki
98-4, Shimotsuruma
Yamato-shi Kanagawa 242(JP)

(74) Representative: Deans, Michael John Percy et al,
Lloyd Wise, Tregear & CO. Norman House 105-109 Strand
London WC2R OAE(GB)

(54) Water-inseparable cement compositions.

(57) A cement composition (which term is intended to include both concrete and mortar) comprises cement and aggregate and incorporates an acrylic polymer compound in an amount of from 0.5 to 4% by weight of the amount of cement. The acrylic polymer compound specifically comprises a polyacrylamide partial hydrolysate having a molecular weight of not lower than one million and a hydrolysis degree of 0.5 to 20 mole %. The composition is capable of being laid under water without substantial separation or washing out of cement from the aggregate.

Croydon Printing Company Ltd.

## WATER-INSEPARABLE CEMENT COMPOSITIONS

Description

The present invention relates to substantially water-inseparable cement compositions.

As concrete is being laid under water, the cement may become separated or washed away from a part of the aggregate upon contact with the water, either as the concrete mix is falling through the water or as the concrete mix is spreading in a widthwise direction under water. The part of the concrete mix from which the cement has been separated or washed away subsequently deteriorates. In order to prevent the cement from becoming separated from the concrete mix in water, a viscosity building agent or viscosity builder such as an acrylic polymer compound, a cellulose derivative or the like may be included in an amount ranging from about 2% to about 4% by weight based on the cement content of the mix. A concrete mix containing such a polymer viscosity builder tends to have a delayed setting time and to have a lower strength, particularly initially, than a concrete mix containing no such agent. This tendency becomes more pronounced as the amount of the viscosity builder is increased. These drawbacks are the biggest obstacle in improving the performance of concrete laid under water.

The present invention has arisen out of our work seeking to provide cement compositions which do not cause such a delay in setting time or reduction in strength, while retaining the ability to prevent separation of the cement and aggregate under water.

According to a first aspect of this invention, there is provided a substantially water-inseparable

0219871

2

cement composition comprising cement, and an acrylic polymer compound, present in an amount of from 0.5 to 4% by weight of the amount of cement, and comprising a polyacrylamide partial hydrolysate having a molecular weight of not lower than one million and a hydrolysis degree of 0.5 to 20% moles.

The partial hydrolysate of polyacrylamide may be produced by the hydrolysis of a polyacrylamide or by the copolymerization of an acrylamide with sodium acrylate. We have found that with a partial hydrolysate of polyacrylamide having a hydrolysis degree of 0.5 to 20% moles, a cement composition can be produced that causes no delay in concrete setting time and no reduction in concrete strength. Where the hydrolysis degree is below a 0.5% mol, we have found a reduction in strength. Where the hydrolysis degree exceeds 20% moles, we have found both a delay in setting time and a reduction in strength.

There is a positive interrelation between the molecular weight of the partial hydrolysate of polyacrylamide and the viscosity of its aqueous solution. The concrete mix should have a viscosity sufficient substantially to prevent the separation of the cement from the aggregate in water. We have found that the polymer compound should desirably have a molecular weight higher than one million, preferably higher than three millions, and more preferably higher than ten millions.

We have found that the requirements for a mortar mix are the same as those for a concrete mix, and the term "cement composition" as used herein is intended to encompass both concrete mixes comprising aggregate in addition to cement and mortar mixes comprising sand in addition to cement. In either case, if the polyacrylamide partial hydrolysate is present in an amount of more than 4% by weight relative to the cement content of the composition, the composition is rendered so viscous as to be difficult to handle and to have a delayed setting time.

The partial hydrolysate of polyacrylamide may be used by pre-mixing it with the cement, by adding it to a concrete or mortar mix or by adding a solution of it in water to a concrete or mortar mix.

Where an acrylic polymer composition is employed as a viscosity enhancer in a cement composition with a view to preventing disintegration of a concrete aggregate or mortar mix in water, we have found that where the acrylic polymer composition comprises a polyacrylamide compound to which a dialdehyde is added, the amount of the acrylic polymer compound may be greatly decreased while still enhancing the effect of preventing disintegration in water; and that acceptably good results can be produced at a far cheaper cost and without too great a reduction in concrete strength or undue delay in concrete setting time.

Accordingly, in a second and alternative aspect of this invention, we provide a substantially water-inseparable cement composition comprising cement, and an acrylic polymer composition present in an amount of from 0.1 to 3% by weight of the amount of cement, and comprising a polyacrylamide compound with a dialdehyde added thereto.

We have found that useful polyacrylamide compounds include, for example, polyacrylamide, polymethacrylamide, partially Mannich-modified polyacrylamide or a copolymer of acrylamide or methacrylamide such as a copolymer thereof with a monomer selected from acrylic acid, methacrylic acid, sodium acrylate, vinylsulphonic acid, 2-acrylamide-2-methylpropanesulphonic acid, dimethylaminopropyl methacrylamide, dialkylaminoalkyl acrylate or its quaternary salt, dialkylaminoalkyl methacrylate or its quaternary salt, diallyldialkyl ammonium salt or other vinyl monomer. Among these compounds we have found polyacrylamide, a copolymer of acrylamide with sodium acrylate, and a polyacrylamide partial hydrolysate to be particularly useful.

Though the useful range for polyacrylamide partial hydrolysate may be greater, we have found that in general the amount of the polyacrylamide compound should be 0.1% or more by weight based on the cement content of a concrete mix in order to provide the concrete mix with the property of not disintegrating in water; when the amount thereof exceeds 3% by weight, the concrete mix tends to become too viscous to handle with ease and this becomes a cause of a delay in setting time.

The dialdehyde to be used may include, for example, glyoxal, malonaldehyde, succinaldehyde, fumaraldehyde, male aldehyde, glutaraldehyde and adipaldehyde. A highly reactive glutaraldehyde is particularly useful.

The amount of the dialdehyde is determined so as to provide a concrete mix having the properties of not disintegrating in water and of retaining a flowability to an appropriate degree. We have found amounts of dialdehyde in the range from 0.1 to 20% by weight, based on the amount of polyacrylamide compound added to the cement composition, to be useful and from 0.1 to 10% by weight to be preferred. The preferred amount of dialdehyde depends on the particular dialdehyde.

The polyacrylamide compound may be used by mixing it with the cement in advance, by adding it to the composition, or by adding a solution of it in water to the composition. The mixing procedure may be compound. The easiest way possible for homogeneously mixing it into the composition may readily be determined.

The invention is hereinafter more particularly described by way of example only by reference to a number of Examples.

## Example 1

Table 1

| Water-cement ratio (%) | Air con-tent (%) | Unit amounts (kg/m$^3$) | | | |
|---|---|---|---|---|---|
| | | Water | Cement | Fine agg-regate | Coarse aggregate |
| 50 | 1 | 200 | 400 | 692 | 1,055 |

To a concrete mix of the constituent proportions as illustrated in Table 1 above was added in each case a polyacrylamide partial hydrolysate having a molecular weight of higher than 10 millions and a hydrolysis degree as shown in Table 2 below, in the amount of 2% by weight based on the cement content. The concrete constituents were then mixed to produce a specimen concrete mix 1 for both measurement while falling through water and compressive strength tests. The specimen concrete mix 1 for the falling through water test was charged into a container in the form of a truncated cone having a bottom diameter of 5 cm, a top diameter of 7 cm and a depth of 8 cm. The falling through water test was conducted by placing the test container with the specimen concrete mix 1 at a height of 10 cm above the water surface in a cylindrical container having a diameter of 20 cm and a height of 26 cm and containing water filled therein to a depth of 16 cm, and then pouring the specimen concrete mix 1 so as to fall by gravity into the water. The test results were obtained by measuring a turbidity of the water by transmittance at a wavelength of 660 mμ with a

photoelectric photometer. Specimens for the compressive strength test were prepared by forming the concrete mix into the form of a cylinder having a diameter of 15 cm and a height of 30 cm, and then curing it in water at 20°C. The tests were carried out on the 7th and 28th days after curing. The test results are shown in Table 2 below.

Table 2

| Hydrolysis degree of polyacrylamide partial hydrolysate (% mole) | Transmittance (%) | Slump (cm) | Compressive strength (kg/cm$^2$) | |
|---|---|---|---|---|
| | | | 7th day | 28th day |
| Plain | 3.0 | 22.0 | 257 | 342 |
| 0.3 | 96.0 | 20.0 | 150 | 282 |
| 0.5 | 96.0 | 20.5 | 235 | 333 |
| 3 | 96.0 | 20.5 | 245 | 365 |
| 6 | 96.5 | 20.5 | 262 | 377 |
| 12 | 96.5 | 20.0 | 240 | 340 |
| 20 | 96.0 | 19.5 | 231 | 333 |
| 30 | 94.8 | 19.0 | 85 | 271 |

Example 2

To a concrete mix having the same proportion as shown in Table 1 was added, in each case, a polyacrylamide partial hydrolysate having a hydrolysis degree of 6% moles in the amount of 0.5%, 1.0%, 2.0% and 4.0% by weight based on the cement content, respectively. The composition was then mixed in the same manner as in Example 1. The test results and the
molecular weights of the polyacrylamide partial
hydrolysates added are shown in Table 3 below.

Table 3

| Polyacrylamide partial hydrolysate | | Transmittance (%) | Slump (cm) | 28-day compressive strength : kg/cm$^2$) |
|---|---|---|---|---|
| Amount (%) | Molecular weight (in thousand) | | | |
| 0.5 | about 1,000 | 48.5 | 23.0 | 340 |
| | about 3,000 | 64.0 | 22.5 | 358 |
| | higher than 10,000 | 69.5 | 22.5 | 349 |
| 1.0 | about 1,000 | 58.0 | 21.0 | 358 |
| | about 3,000 | 72.0 | 21.0 | 363 |
| | higher than 10,000 | 89.5 | 21.5 | 368 |
| 2.0 | about 1,000 | 88.0 | 21.0 | 369 |
| | about 3,000 | 92.0 | 20.5 | 375 |
| | higher than 10,000 | 96.5 | 20.5 | 377 |
| 4.0 | about 1,000 | 97.0 | 18.0 | 328 |
| | about 3,000 | 98.0 | 17.5 | 330 |
| | higher than 10,000 | 99.5 | 17.0 | 331 |

As shown in the test results obtained in
Examples 1 and 2, it was found that the use of a proper
proportion of a polyacrylamide partial hydrolysate
having a hydrolysis degree ranging from 0.5 to 20%
moles as a viscosity builder can provide a concrete mix which does not have a delayed setting time or a reduced strength, and which does not allow its cement component to become separated or washed away in water. It was further found that the use of a polyacrylamide partial hydrolysate having a molecular weight of at least one million can provide such a concrete mix having the property of preventing separation in water, while causing no delay in setting time and no reduction in strength, which were the two obstacles to improvement in the performance of concrete laid under water by the use of conventional viscosity builders.

Example 3

A mortar mixer was filled with 520 g of cement and 130 g of water, and the mixture was mixed to give a cement paste having a water-cement ratio of 25%. To the resulting paste was added, in each case, a polyacrylamide partial hydrolysate in the amount of 0.1, 0.5 and 1.0% by weight based on the cement content, respectively, in the form of a 2% aqueous solution. As a control was used a paste containing no such viscosity builder. The paste was then adjusted by the addition of water so as to attain a whole water-cement ratio of 65%. To this homogeneous paste was added 1,040 g of standard sand ("Toyoura"), and the resulting paste was mixed to give a homogeneously-mixed specimen mortar mix 2. The resulting specimen mortar mix 2 was filled into a cylindrical container having a diameter of 5 cm and a height of 5 cm and was then poured so that it fell by gravity from a position 10 cm above the water surface in a 1-liter volume measuring cylinder with 1 liter of water filled therein. The test results were obtained by measuring a turbidity of water by transmittance at a wavelength of 660 mμ with a photoelectric photometer. The test results are shown in Table 4 below.

Table 4

Test results of mortar specimen 2

| Viscosity builder | Amount of viscosity builder (% by weight) | Flow (cm) | Transmittance (%) |
|---|---|---|---|
| - | 0 | 26.0 | 4 |
| Polyacryl-amide partial hydrolysate | 0.1 | 22.0 | 69 |
| | 0.5 | 20.0 | 85 |
| | 1.0 | 18.0 | 92 |

To the rest of the mortar mix containing the polyacrylamide partial hydrolysate was added glutaraldehyde in the amounts of 0.5, 1.0 and 2.0% by weight based on the partial hydrolysate content, respectively, and the mixture was mixed in the same manner to produce a specimen mortar mix 3. The specimen mortar mix 3 was tested in the same manner as above, and the test results are shown in Table 5 below.

Table 5

Test results of mortar specimen 3

| Viscosity builder | Amount of viscosity builder (% by wt.) based on the cement content | Amount of glutar- aldehyde (% by wt.) based on the viscos- ity builder content | Flow (cm) | Transmittance (%) |
|---|---|---|---|---|
| Polyacryl- amide partial hydrolysate | 0.5 | 0 | 20.0 | 85 |
| | | 1.0 | 18.5 | 92 |
| | | 2.0 | 17.0 | 98 |
| | 1.0 | 0 | 18.0 | 92 |
| | | 0.5 | 17.0 | 96 |
| | | 1.0 | 15.5 | 99 |

From the test results above, it was found that (a) the addition of the viscosity builder in the amount of 0.1% by weight or more based on cement content renders transmittance remarkably high. That is to say, when mortar is falling through water, the amount of cement separated from the mortar mix is reduced to a considerably small quantity. It is also found that (b) transmittance can be further improved by the addition of glutaraldehyde. It becomes apparent that the addition of glutaraldehyde merely in the amount of 2% with respect to the polyacrylamide partial hydrolysate content can reduce the amount of polyacrylamide partial hydrolysate required for attaining the same degree of transmittance as above to a half or less.

Example 4

A concrete mix was produced in the same constituent proportions as shown in Table 1.

To the above concrete mix was added a polyacrylamide partial hydrolysate in the amount of 0.1, 0.4, 0.6, 0.8, 1.5, 2.0 and 3.0% by weight, respectively, based on the cement content. This composition was mixed, and glutaraldehyde was added in an amount ranging from 0.1 to 20% by weight based on the polyacrylamide partial hydrolysate content to the concrete mix to give a specimen concrete mix 4. The specimen concrete mix 4 was tested in the same manner as in the case of the specimen mortar mixes and measured for a turbidity of water in the same manner as above. The specimen concrete mix 4 was filled into a container in the form of a truncated cone having a bottom diameter of 5 cm, a top diameter of 7 cm and a depth of 8 cm. The specimen concrete mix 4 was poured so as to fall by gravity from the container from a position 10 cm above the water surface in a cylindrical container having a diameter of 20 cm and a depth of 26 cm with water filled to a depth of 16 cm therein. The turbidity of water was observed for measuring transmittance at a wavelength of 660 mμ with a photoelectric photometer.

A cylindrical specimen 5 having a diameter of 15 cm and a height of 30 cm was also obtained from the specimen concrete mix 4. After being cured at 20°C for 28 days in water, the specimens 5 were measured for compressive strength.  The test results are shown in

Table 6.

Table 6

Test results of concrete specimen 4

| Amount of viscosity builder (% by wt.) based on the cement content | Amount of glutar-aldehyde (% by wt.) based on the vis-cosity builder content | Transmit-tance (%) | Slump (cm) | Compressive strength (kg/cm$^2$) |
|---|---|---|---|---|
| - | - | 3.0 | 22.0 | 342 |
| 0.1 | - | 34.0 | 21.0 | 358 |
| | 10 | 69.5 | 19.5 | 378 |
| | 20 | 85.0 | 18.5 | 380 |
| 0.4 | - | 72.0 | 20.0 | 333 |
| | 1.0 | 85.0 | 19.5 | 349 |
| | 2.0 | 92.5 | 17.0 | 365 |
| 0.6 | - | 69.0 | 22.5 | 328 |
| | 0.5 | 86.0 | 21.0 | 372 |
| | 1.0 | 97.5 | 19.5 | 439 |
| 0.8 | - | 80.0 | 22.0 | 346 |
| | 0.5 | 89.0 | 21.0 | 368 |
| | 1.0 | 98.5 | 19.0 | 417 |
| 1.0 | - | 89.5 | 21.5 | 350 |
| | 0.5 | 96.0 | 20.0 | 391 |
| 1.5 | - | 94.0 | 21.0 | 365 |
| | 0.2 | 96.0 | 21.0 | 371 |
| 2.0 | - | 96.0 | 20.5 | 377 |
| | 0.2 | 99.0 | 20.0 | 380 |
| 3.0 | - | 98.0 | 18.0 | 337 |
| | 0.1 | 99.0 | 17.0 | 340 |

From the above test results, it was found that (a) the addition of glutaraldehyde improves transmittance to a considerable extent in the same manner as in the case of the above specimen mortar mix. It was also found that (b), in instances where transmittance is set to be 95%, although the single addition of the polyacrylamide partial hydrolysate requires 2.0% by weight or more based on the cement content, the use of glutaraldehyde in the amount of 1.0% by weight based on the polyacrylamide partial hydrolysate content can reduce the amount of the polyacrylamide partial hydrolysate required by 0.6% by weight, that is, to less than 1/3, based on the cement content. It was further found that (c) the addition of glutaraldehyde increases compressive strength.

It was found that the concrete mix according to this example was provided with viscosity and, as a result, gained the property of preventing disintegration in water. In particular, when compared to the single addition of the polyacrylamide compound, the addition of the dialdehyde can reduce the amount of the polyacrylamide compound by a considerable extent. As a result of enhancing the property of preventing disintegration in water as well as improving strength by the addition of the dialdehyde, concrete capable of being laid under water can be produced at a cheaper cost and with a lesser reduction in strength than for conventional concrete compositions.

CLAIMS

1.     A cement composition comprising cement and aggregate, and being characterised in that it incorporates an acrylic polymer compound present in an amount of from 0.5 to 4% by weight of the amount of cement, said acrylic polymer compound comprising a polyacrylamide partial hydrolysate having a molecular weight of not lower than one million and a hydrolysis degree of 0.5 to 20 mole %, and in that said composition is capable of being laid under water without substantial separation or washing out of cement from the aggregate.

2.     A composition according to Claim 1, wherein said polyacrylamide partial hydrolysate comprises a copolymer of an acrylamide with sodium acrylate.

3.     A composition according to Claim 1 or Claim 2, further characterised in that said polyacrylamide partial hydrolysate has a molecular weight of not lower than three millions.

4.     A composition according to any preceding Claim, further characterised in that said polyacrylamide partial hydrolysate has a molecular weight of not lower than ten millions.

5.     A method of laying concrete or mortar in water without substantial separation or washing out of cement from the aggregate in the concrete or mortar composition, the method being characterised in that to said concrete or mortar composition prior to the step of laying said composition in water is added an acrylic polymer compound in an amount of from 0.5 to 4% by weight of the amount of cement in said composition, said acrylic polymer compound comprising a polyacrylamide partial hydrolysate having a molecular weight of not lower than one million and a hydrolysis degree of 0.5 to 20 mole %.